# EUROPÄISCHE PATENTSCHRIFT

(11) **EP 0 585 547 B1**
(45) Veröffentlichungstag und Bekanntmachung des Hinweises auf die Patenterteilung: **09.10.1996**
(21) Anmeldenummer: 93109243.1
(22) Anmeldetag: 09.06.1993
(51) Int. Cl.: C04B 35/80, C04B 35/66, C01F 7/16

(54) **Feuerfester Faserbaukörper**
Refractory fiber containing bodies for construction
Corps à construction réfractaires contenant de fibres

(30) Priorität: 26.08.1992 DE 4228355
(43) Veröffentlichungstag der Anmeldung: 09.03.1994
(73) Patentinhaber: DIDIER-WERKE AG, 65189 Wiesbaden (DE)
(72) Erfinder: Eschner, Axel, Dr., D-6200 Wiesbaden (DE)
(74) Vertreter: Brückner, Raimund, Dipl.-Ing.

(56) Entgegenhaltungen:
- DE-A- 2 748 127
- DE-A- 3 444 397

## Beschreibung

Die Erfindung betrifft Faserbaukörper in Form von feuerfesten Leichtformkörpern.

Faserhaltige Leichtformkorper sind wohlbekannte Produkte. Sie werden aus mineralischen bzw. feuerfesten Fasern gegebenenfalls unter Zusatz von üblichen Zusatzstoffen sowie Zuschlägen hergestellt. So sind z.B. aus der DE-AS 27 32 387 Mineralfaserplatten bekannt, welche durch Tränken einer durch ein organisches Kunststoffbindemittel vorgebundenen Mineralfaserplatte mit einer wässrigen Aufschlämmung eines Bindetons und anschließendes Verfestigen durch Tempern hergestellt werden. Aus der EP 0 006 362 sind Platten bekannt, welche in einer Matrix aus plastischem Ton als Verstärkung anorganische Fasern enthalten. In solchen Faserplatten werden Mineralfasern, Asbest oder Feuerfestfasern aus Al203 verwendet.

Keramische Fasern des Standes der Technik aus dem System Al203-Si02 mit 40-75 Gew.% Al203 sind röntgenamorph, und vorbekannte Fasern mit 80-95 Gew.% Al203, Rest Si02, sind kristallin. Solche Fasern werden zur Wärmeisolation bei erhöhten Temperaturen in Form von Matten und faserhaltigen Formkörpern, sowie zur Herstellung von verstärkten keramischen oder metallischen Formkörpern verwendet. Die vorbekannten keramischen Fasern haben eine hohe Beständigkeit gegen Wasser, d.h. sie lösen sich in Wasser oder in physiologischen Lösungen nicht oder nur nach sehr langer Zeit. Bei Temperaturanwendung kristallieren die Fasern aus oder zeigen im Fall der bei Anlieferung bereits kristallinen Fasern ein weiteres Kristallwachstum. Der Habitus der Faser, charakterisiert durch das Längen-Durchmesser-Verhältnis, bleibt in allen-Fällen erhalten. Dazu kommt, daß in der Anlieferung röntgenamorphe Fasern auf Grund ihres hohen Anteils an Si02 bei Temperaturanwendung Cristobalit bilden, der Silikose verursacht.

Ferner besteht die Vermutung, daß keramische Fasern krebsauslösend sein könnten, wofür als wesentlicher Grund ihre Beständigkeit gegen Lösung in Wasser bzw. in Körperflüssigkeit gesehen wird. Sie bleiben als feinfaserige Fremdkörper ähnlich wie Asbestfasern im Körper erhalten und könnten zu Reizungen fuhren. Aus "Keramik und Glas", Mitteilungen der Berufsgenossenschaft der Keramischen und Glas-Industrie, März 1992, Nr.1, S. 30-41, insbesondere Seite 38-40, sind Werte für die sogenannte "Netzwerkauflösegeschwindigkeit" und die Verweildauer von verschiedenen Fasern in Flüssigkeit bekannt.

Aufgabe der Erfindung sind Faserbaukörper in Form von feuerfesten Leichtbaukörpern, bei deren Herstellung Fasern eingesetzt wurden, die möglichst frei von Si02 sind, die sich in ihren thermischen und mechanischen Eigenschaften nicht wesentlich von vorbekannten Faserbaukörpern unterscheiden und die nach der Verfestigung nur mehr wenige oder gar keine eigentlichen Fasern mehr enthalten, so daß eine Gesundheitsgefährdung von solchen erfindungsgemäßen Faserbaukörpern nicht erwartet werden kann.

Zur Lösung dieser Aufgabe dienen die Faserbaukörper in Form von feuerfesten Leichtformkörpern, insbesondere Platten, welche unter Verwendung von anorganischen Fasern, die zu wenigstens 90% aus 20-50 Gew.% Ca0 und 50-80 Gew.% Al203 und einem Rest von maximal 10 Gew.% üblicher verunreinigender Oxide bestehen, unter Verwendung von Wasser oder einer wasserhaltigen Flüssigkeit als Ansatzflüssigkeit, gegebenenfalls unter Verwendung von üblichen feuerfesten Zusatzstoffen, hergestellt wurden. Die anorganischen Fasern mit erhöhtem Gehalt an Calciumoxid sind nach CEN (Comité Européen de Normalisation) Dokument CEN/TC 187/WG3/N27, Januar 1992, nicht als keramische Faser zu bezeichnen, da diese weniger als 2 Gew.-% Alkali - und Erdalkalioxide enthalten. -

Die bei der Herstellung der erfindungsgemäßen Faserbaukörper verwendeten anorganischen Fasern, wie sie zuvor definiert wurden, sind neue Produkte, die in der gleichzeitig eingereichten Patentanmeldung P 42 28 353.1-43 (internes Aktenzeichen PA 4056) der Anmelderin näher beschrieben sind.

Der Zusammensetzung der Fasern zu wenigstens 90% aus 20-50 Gew.% Ca0 und 50-80 Gew.% Al203 liegt im wesentlichen das System Ca0-Al203 zugrunde. Die Zusammensetzung der Fasern ist so gewählt, daß sie den Calcium-Aluminatzementen entspricht.

Als Zusatzstoffe bzw. Zuschlagstoffe können in den erfindungsgemäßen Faserbaukörpern die in der Wärmeisoliertechnik bei hohen Temperaturen üblichen Stoffe verwendet werden, z.B. in feinteiliger Form. Beispiele hierfür sind: Aluminiumoxid, Ton,Zr02, Ti02, organische Fasern bzw. organische feinteilige Stoffe als Ausbrennsubstanzen, Tenside und andere Hilfsstoffe.

Bei der Herstellung der erfindungsgemäß verwendeten Fasern können die üblichen Ausgangsstoffe wie bei der Herstellung von Calcium-Aluminatzementen verwendet werden, ferner können übliche, in geringer Menge zuzusetzende Hilfsstoffe, z.B. Anhydrid (CaS04), eingesetzt werden.

Übliche oxidische Verunreinigungen in solchen Calcium-Aluminatzementen sind Mg0, Ti02, Eisenoxid und Si02, die daher auch in den erfindungsgemäß verwendeten Fasern vorliegen können. Ihre Gesamtmenge sollte jedoch maximal 10 Gew.%, bezogen auf die Gesamtzusammensetzung der Fasern, und insbesondere 5 Gew.% nicht übersteigen. Insbesondere soll der Gehalt an Si02 den Wert von 1,5 Gew.%, bevorzugt 0,8 Gew.%, nicht übersteigen.

Die Fasern können nach den bekannten Methoden zur Herstellung von mineralischen Fasern hergestellt werden, z.B. durch Verblasen oder durch Schleuderverfahren.

Die aus der dünnflüssigen Schmelze der Ausgangsstoffe, insbesondere durch Verblasen, erzeugten Fasern sind weitgehend röntgenamorph, sie hydratisieren und zerfallen bei Kontakt mit Wasser unter Verlust ihrer Fasergestalt.

Die erfindungsgemäß verwendeten Fasern haben übliche Abmessungen, vorzugsweise einen Durchmesser von 1 bis 5 µm und einen mittleren Durchmesser von 3 µm, sowie eine Länge von > 20 µm. Der maximale Faserdurchmesser beträgt bevorzugt 10 µm.

Es zeigt sich in überraschender Weise, daß derartige Fasern in Wasser bereits nach wenigen Tagen hydratisieren und beginnen, ihre Faserform zu verlieren.

Bei der Herstellung der erfindungsgemäßen Faserformkörper wird die Ausgangsmischung aus Fasern, gegebenenfalls Zusatzstoffen und Wasser daher ohne Entwässerung so lange stehen gelassen, bis die Mischung erhärtet ist und die Fasern weitgehend oder vollständig ihre Faserform verloren haben, wobei die Ausgangsmischung selbstverständlich mit einer hierzu ausreichenden Wassermenge angesetzt werden muß. Die Wasserzusatzmenge beträgt im allgemeinen wenigstens 5 bis zu 20 Gew.%, bezogen auf die Gesamtausgangsmischung, d.h. das Verhältnis zwischen Fasern und gegebenenfalls Zusatzstoffen zu Wasser liegt in einem allgemeinen Bereich von 95 : 5 bis 80 : 20.

Die anorganische Faser, die gemäß der Erfindung verwendet wird, zersetzt sich fortschreitend in Gegenwart von Wasser bzw. Körperflüssigkeit durch Hydratation und verliert die Faserstruktur mit zunehmender Hydratation und ist somit auf Grund ihres Habitus als Faser nach relativ kurzer Zeitspanne eines Wasserkontaktes nicht mehr gesundheitsgefährlich. Dies ist vorteilhaft bei der Anlieferung und Verarbeitung zu den erfindungsgemäßen Faserbaukörpern. Bei einem Einatmen der erfindungsgemäß verwendeten Fasern bei einer solchen Herstellung zerfallen diese innerhalb längstens weniger Tage, so daß keine Silikosegefährdung zu befürchten ist.

Ferner sind die Fasern nach der Herstellung der Faserbaukörper weitgehend oder vollständig zerfallen bzw. haben ihre Form von spitzen Fasern, die eine Gesundheitsgefährdung darstellen könnten, verloren, so daß bei einem späteren Ausbruch von erfindungsgemäßen Faserbaukörpern oder deren Abfallbeseitigung keine besonderen Vorsichtsmaßnahmen getroffen werden müssen.

Die bei der Herstellung der erfindungsgemäßen Faserbaukörper verwendeten anorganischen Fasern können wie folgt hergestellt werden:

### Herstellungsbeispiel 1

Eine Mischung aus 50 Gew.% Tonerde und 50 Gew.% calciniertem Kalk wurde zu Pellets verpreßt. Die Pellets wurden in einem Ofen bei 1650°C geschmolzen, und die Schmelze wurde mit Preßluft verblasen.

Dabei wurden Fasern mit einem Durchmesser von bis zu 8 µm und einem mittleren Faserdurchmesser von 3 µm erhalten. Diese Fasern zeigten bei der Lagerung in Wasser bereits nach 4 Stunden eine beginnende Hydratation und nach 2 Tagen waren die Fasern weitgehendst zerfallen. An der getrockneten Probe der 2 Tage in Wasser gelagerten Fasern konnten bei der Untersuchung im Rasterelektronenmikroskop (REM) keine Fasern mehr nachgewiesen werden.

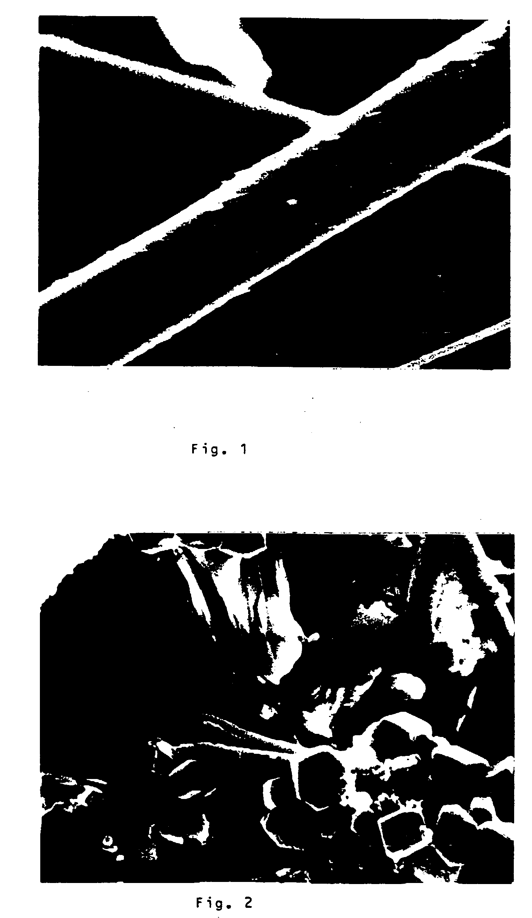

Die Fig. 1 zeigt eine Fotografie der REM-Aufnahme von Fasern nach ihrer Herstellung bei einer Vergrößerung von x 2100.

In der Fig. 2 ist eine Fotografie der REM-Aufnahme von 2 Tage in Wasser aufbewahrten Fasern bei einer Vergrößerung von x 2000 gezeigt.

Aus dem Vergleich dieser beiden Fotografien ist eindeutig ersichtlich, daß die Fasern nach der Lagerung in Wasser während 2 Tagen ihre Faserstruktur bzw. ihren Faserhabitus fast vollständig verloren hatten.

### Herstellungsbeispiel 2

Fasern einer anderen Ausgangsmischung mit 63 Gew.% Tonerde, 30 Gew.% calciniertem Kalk, 5 Gew.% Calciumsulfat und 2 Gew.% verunreinigenden Oxiden (Fe203, Mg0, Si02) führten zu einem ähnlichen Ergebnis wie die zuvor beschriebenen Fasern der Mischung mit 50 Gew.% Tonerde und 50 Gew.% calciniertem Kalk. Bei der Herstellung wurde die Ausgangsmischung wie im Beispiel 1 bei 1650°C aufgeschmolzen und zu Fasern verblasen.

Die zuvor beschriebenen anorganischen Fasern können in an sich bekannter Weise zu Faserbaukörpern verarbeitet werden.

### Beispiel 1

Hierzu werden die Fasern, hergestellt aus einer Mischung mit 50 Gew.% Tonerde und 50 Gew.% calciniertem Kalk gemäß Herstellungsbeispiel 1, in einer Menge von 90 Gew.-Teilen Fasern auf 10 Gew.-Teile. Wasser zu einer Formmasse angesetzt und bei einem Preßdruck von 1 N/m² zu Formkörpern (Platten) verdichtet.

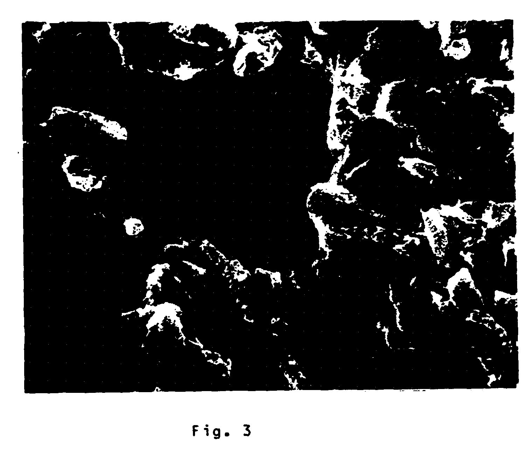

Die Formkörper wurden bei 25° C, 100% Luftfeuchtigkeit, über 24 Stunden gelagert, wobei die Fasern weitgehend hydratisierten und hierdurch eine hydraulische Abbindung erfolgte. Es wurde so eine Leichtbauplatte erhalten, in der die Fasern weitgehend zerfallen waren, die aber eine hohe Porosität bei gleichzeitiger hoher mechanischer Festigkeit und ausgezeichneten Feuerfesteigenschaften aufwies. Beim anschließenden Brand bei 1000°C erwiesen sich die Formkörper als formbeständig. Die Untersuchung im Rasterelektronenmikroskop konnte nur noch wenige Faserreste nachweisen (Fig. 3).

### Beispiel 2

Aus den in Herstellungsbeispiel 2 erhaltenen anorganischen Fasern, feinteiligem Aluminiumoxid als Zusatzstoff bzw. Zuschlag und Wasser wurde eine Masse in folgendem Mischungsverhältnis hergestellt: 60 Gew.-Tle. Fasern, 30 Gew.-Tle. feinteiliges Aluminiumoxid (gebrannter und gemahlener Bauxit), 10 Gew.-Tle. Wasser. Die Weiterverarbeitung erfolgte entsprechend der Arbeitsweise von Beispiel 1.

Es wurde ein Leichtformkörper mit ausgezeichneten mechanischen und wärmeisolierenden Eigenschaften erhalten, da trotz der verlorengegangenen Fasergestalt die Porosität wie bei Verwendung von ihre Gestalt nicht verändernden Mineralfasern erhalten geblieben war.

## Patentansprüche

1. Faserbaukörper in Form von feuerfesten Leichtformkörpern, insbesondere Platten, hergestellt unter Verwendung von anorganischen Fasern, welche zu wenigstens 90% aus 20-50 Gew.% Ca0 und 50-80 Gew.% Al203 und einem Rest von maximal 10 Gew.% üblicher verunreinigender Oxide bestehen, unter Verwendung von Wasser oder einer wasserhaltigen Flüssigkeit als Ansatzflüssigkeit, gegebenenfalls unter Verwendung von üblichen feuerfesten Zusatzstoffen.

2. Faserbaukörper nach Anspruch 1, dadurch gekennzeichnet, daß zu seiner Herstellung Fasern verwendet wurden, welche einen Rest von maximal 5 Gew.% üblicher verunreinigender Oxide aufweisen.

3. Faserbaukörper nach Anspruch 1 oder 2, dadurch gekennzeichnet, daß bei seiner Herstellung Fasern verwendet wurden, welche bis zu 1,5 Gew.% Si02, bezogen auf die Gesamtzusammensetzung der Faser, enthielten.

4. Faserbaukörper nach einem der vorhergehenden Ansprüche, dadurch gekennzeichnet, daß er bis zu 50 Gew.%, bezogen auf die trockene Gesamtzusammensetzung, an üblichen, feuerfesten Zusatzstoffen enthält.

5. Verfahren zur Herstellung von Faserbaukörpern nach einem der Ansprüche 1 bis 4, dadurch gekennzeichnet, daß eine Mischung aus den in Anspruch 1 beschriebenen Fasern sowie gegebenenfalls Zusatzstoffen in einem Verhältnis von 90:10 bis 50:50 und Wasser hergestellt wird und aus dieser Formmasse unter Pressen ein Formkörper hergestellt wird und dieser Formkörper bei Zimmertemperatur für die übliche Zeitspanne zur Hydratisierung und Ausbildung der hydraulischen Abbindung gelagert wird.

## Claims

1. Fibre-containing construction bodies in the form of refractory light shaped bodies, particularly plates, manufactured using inorganic fibres, of which at least 90% comprise 20-50 wt.% CaO and 50-80 wt.% Al₂O₃ and a remainder of at most 10 wt.% conventional contaminating oxides, using water or a water-containing liquid as the make up liquid, optionally using conventional refractory additive materials.

2. Fibre-containing construction bodies as claimed in Claim 1, characterised in that fibres were used in its manufacture which have a remainder of at most 5 wt.% conventional contaminating oxides.

3. Fibre-containing construction body as claimed in Claim 1 or 2, characterised in that fibres were used in its manufacture which contained up to 1.5 wt.% SiO₂ with respect to the total composition of the fibres.

4. Fibre-containing construction body as claimed in one of the preceding claims, characterised in that it contains up to 50 wt.% conventional refractory additive materials with respect to the dry total composition.

5. Method of manufacturing fibre-containing construction bodies as claimed in one of Claims 1 to 4, characterised in that a mixture is produced of the fibres described in Claim 1 and optionally additive materials in a ratio of 90:10 to 50:50 and water and a shaped body is produced from this moulding composition by pressing and this shaped body is stored at room temperature for the conventional period of time for the purpose of hydration and forming the hydraulic bonding.

## Revendications

1. Elément de construction à base de fibres, sous la forme d'éléments façonnés légers réfractaires, en particulier de plaques, que l'on prépare en utilisant des fibres minérales qui sont constituées pour au moins 90% d'un mélange renfermant 20 à 50% en poids de CaO et 50 à 80% en poids de Al₂O₃, et d'un reste représentant au maximum 10% en poids, formé par des oxydes impuretés habituels, de l'eau où un liquide renfermant de l'eau en tant que liquide ajouté, et éventuellement des additifs réfractaires habituels.

2. Elément de construction à base de fibres selon la revendication 1, caractérisé en ce que l'on utilise pour sa préparation des fibres qui présentent un reste d'oxydes impuretés habituels représentant au maximum 5% en poids.

3. Elément de construction à base de fibres selon la revendication 1 ou 2, caractérisé en ce que l'on utilise pour sa préparation des fibres qui contiennent jusqu'à 1,5% en poids de SiO₂, ce pourcentage étant rapporté à la composition totale de la fibre.

4. Elément de construction à base de fibres selon l'une quelconque des revendications précédentes, caractérisé en ce qu'il contient jusqu'à 50% en poids d'additifs réfractaires habituels, ce pourcentage étant rapporté à la composition totale à sec.

5. Procédé de préparation d'éléments de construction à base de fibres selon l'une quelconque des revendications 1 à 4, caractérisé en ce que l'on prépare un mélange constitué des fibres décrites à la revendication 1 et éventuellement d'additifs, selon un rapport de 90:10 à 50:50, et d'eau, on prépare à partir de cette matière façonnable, par compression, un élément façonné et on laisse cet élément façonné à la température de la salle pendant le temps habituel pour l'hydratation et la formation de la prise hydraulique.
